# EUROPÄISCHE PATENTSCHRIFT

(11) **EP 1 177 941 B1**
(45) Veröffentlichungstag und Bekanntmachung des Hinweises auf die Patenterteilung: **09.07.2008**
(21) Anmeldenummer: 01113245.3
(22) Anmeldetag: 31.05.2001
(51) Int. Cl.: B60Q 1/42

(54) **Rückstellvorrichtung für einen Blinkerschalter in Kraftfahrzeugen**
Vehicle turn signal cancel device
Mécanisme de rappel pour indicateur de direction de véhicule

(30) Priorität: 02.08.2000 DE 10037585
(43) Veröffentlichungstag der Anmeldung: 06.02.2002
(73) Patentinhaber: Valeo Schalter und Sensoren GmbH, 74321 Bietigheim-Bissingen (DE)
(72) Erfinder: Papenfuss, Jürgen, 74343 Sachsenheim (DE); Machalitzky, Otto, 74321 Bietigheim-Bissingen (DE)
(74) Vertreter: Dreiss, Fuhlendorf, Steimle & Becker

(56) Entgegenhaltungen:
- DE-A1- 2 528 681
- DE-A1- 3 502 650
- DE-B1- 2 729 537
- US-A- 5 385 067
- US-A- 5 672 855
- PATENT ABSTRACTS OF JAPAN Bd. 2000, Nr. 10, 17. November 2000 (2000-11-17) -& JP 2000 185594 A (YUHSHIN CO LTD), 4. Juli 2000 (2000-07-04)

## Beschreibung

Die vorliegende Erfindung betrifft eine Rückstellvorrichtung für einen Blinkerschalter in Kraftfahrzeugen mit den Merkmalen des Oberbegriffs des Anspruchs 1.

Eine solche Rückstellvorrichtung ist z.B. aus der US-A-5,672,855 bekannt. Bei einer Betätigung des Blinkerschalters gibt das Schaltstück den Auslösefinger frei, so dass dieser nach radial innen zur Lenkspindel hin ausrückt und in die Kreisbahn des mit der Lenkspindel verbundenen Nockens hineinragt. Das Ausrücken des Auslösefingers wird durch eine Wendel-Druckfeder bewirkt, die sich einerseits am Auslösefinger und andererseits am Gehäuse der Rückstellvorrichtung abstützt.

Die bekannte Rückstellvorrichtung funktioniert zwar gut, als nachteilig wurden jedoch vor allem zwei Punkte erkannt: Zum einen ist in modernen Kraftfahrzeugen nur noch sehr wenig Platz im Bereich der Lenksäule vorhanden, so dass der Einbau der noch relativ voluminösen Rückstellvorrichtung mit Schwierigkeiten verbunden ist. Zum anderen handelt es sich bei der bekannten Rückstellvorrichtung um ein relativ kompliziert herzustellendes Teil, das den Kostenanforderungen beim Bau heutiger Kraftfahrzeuge nicht immer gerecht wird.

Die vorliegende Erfindung hat daher die Aufgabe, eine Rückstellvorrichtung der eingangs genannten Art so weiter zu bilden, dass sie einerseits kleiner baut und andererseits preiswert herzustellen ist.

Diese Aufgabe wird mit einer Rückstellvorrichtung gelöst, die die Merkmale des Anspruchs 1 aufweist.

Erfindungsgemäß wurde erkannt, dass ein Grund für die relativ voluminöse Bauweise der bekannten Rückstellvorrichtung in der bisher verwendeten Art der Vorspannung des Auslösefingers liegt. Bei der bekannten Rückstellvorrichtung kommt eine Wendel-Druckfeder zum Einsatz, die, um vor einem Ausknicken geschützt zu sein, eine Führung benötigt, welche wiederum relativ groß baut. Darüber hinaus ist ein Zwischenstück erforderlich, welches zwischen Feder und Auslösefinger angeordnet wird.

Die Wendel-Druckfeder, deren Führung und das Zwischenstück erfordern Platz, der nicht mehr zur Verfügung steht. Die besagten Teile sind bei der erfindungsgemäßen Rückstellvorrichtung nicht mehr erforderlich: Deren Blattfeder weist systemtypisch eine Eigensteifigkeit auf, so dass eine Führung nicht erforderlich ist. Darüber hinaus kann eine Blattfeder ohne Zwischenstück den Auslösefinger beaufschlagen. Die erfindungsgemäß vorgesehene Blattfeder baut daher insgesamt sehr viel kleiner als die beim Stand der Technik vorgesehene Wendel-Druckfeder. Ferner fallen die für die Führung der herkömmlichen Wendel-Druckfeder und für deren Anschluss an den Auslösefinger erforderlichen Teile bei der erfindungsgemäßen Rückstellvorrichtung weg, was die direkten Herstellkosten ebenso wie die Kosten beim Zusammenbau der Rückstellvorrichtung senkt.

Die erfindungsgemäße Rückstellvorrichtung ist so ausgestaltet, dass die Blattfeder in Einschaltstellung im Wesentlichen kreisförmig gekrümmt ist und der Kreismittelpunkt in etwa im Drehpunkt des Schaltstücks liegt. Bei einer derartig geformten und angeordneten Blattfeder ist die Deformation, die die Blattfeder vom ausgerückten Zustand des Auslösefingers in seinen eingerückten Zustand erfährt, relativ gering und so gleichmäßig, dass die bei seiner Betätigung erfolgende Drehbewegung des Auslösefingers durch die Blattfeder nicht behindert wird.

Vorteilhafte Weiterbildungen der Erfindung sind in Unteransprüchen angegeben.

Bei einer Weiterbildung der Erfindung ist am Auslösefinger ein im Wesentlichen parallel zur Achse der Lenkspindel erstreckender Ansatz vorhanden, an dem die Blattfeder angreift. Durch einen solchen Ansatz wird eine definierte Kontaktfläche zwischen dem Auslösefinger und der Blattfeder geschaffen, ohne dass einn separates Teil oder spezielle Maßnahmen an der Blattfeder selbst erforderlich sind. Ggf. kann die Blattfeder aber auch an einer Rückseite des Auslösefingers anliegen.

Ein solcher Ansatz kann gleichzeitig dazu verwendet werden, den Auslösefinger gegenüber dem Gehäuse zu führen. Dies wird durch jene Weiterbildung der Erfindung zum Ausdruck gebracht, bei der im Gehäuse eine senkrecht zur Achse der Lenkspindel verlaufende Nut vorhanden ist, in die der Ansatz eingreift.

In Weiterbildung der Erfindung wird auch vorgeschlagen, dass mindestens ein Ende der Blattfeder in einer Ausnehmung im Gehäuse aufgenommen ist. Bei einer bogenförmigen beidseitig eingespannten Blattfeder kann so deren Aufnahme durch eine Verspannung der Blattfeder zwischen zwei Ausnehmungen im Gehäuse erfolgen. Aber auch eine einseitig eingespannte Blattfeder kann auf diese Weise leicht im Gehäuse aufgenommen werden.

Besonders bevorzugt ist jene Weiterbildung der erfindungsgemäßen Rückstellvorrichtung, bei der mindestens ein Ende der Blattfeder an das Gehäuse angeformt ist. Im Allgemeinen kann zwar davon ausgegangen werden, dass die Blattfeder aus einem anderen Material hergestellt ist als das Gehäuse. Mit den Möglichkeiten der Herstellung des Gehäuses in Zwei-Komponenten-Technik stellt dies jedoch kein Problem dar. Bei dieser Weiterbildung wird die Herstellung der erfindungsgemäßen Rückstellvorrichtung nochmals erheblich vereinfacht und somit verbilligt.

In vielen Fällen ist es für die Herstellung der erfindungsgemäßen Rückstellvorrichtung sinnvoll, auf den Einsatz von Metallteilen möglichst zu verzichten. Um dennoch die ggf. für die Blattfeder erforderliche Stellkraft bereitstellen zu können, wird in einer Weiterbildung der Erfindung vorgeschlagen, dass die Blattfeder aus einem faserverstärkten Kunststoffmaterial hergestellt ist. Dabei ist es günstig, wenn die Fasern unidirektional in Längsrichtung der Blattfeder angeordnet sind.

Zwischen der Blattfeder und dem Auslösefinger kommt es im Betrieb vor allem bei der Drehbewegung des Auslösefingers aufgrund einer Betätigung im Allgemeinen zu einer Relativbewegung. Es kann daher angeraten sein, den Bereich der Blattfeder, welcher am Auslösefinger anliegt, verstärkt auszuführen.

Nachfolgend wird ein Ausführungsbeispiel der Erfindung unter Bezugnahme auf die beiliegende Zeichnung im Detail erläutert. In der Zeichnung zeigen:
- Figur 1: eine teilweise geschnittene Darstellung wesentlicher Komponenten einer Rückstellvorrichtung in der neutralen Mittelstellung;
- Figur 2: eine Ansicht der Rückstellvorrichtung von Figur 1 in einer Einschaltstellung; und
- Figur 3: eine Ansicht der Rückstellvorrichtung von Figur 1 während der selbsttätigen Rückstellung.

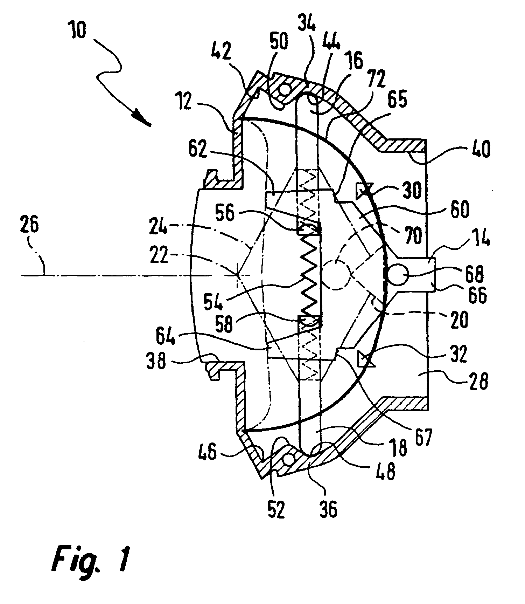

In Figur 1 trägt eine Rückstellvorrichtung für einen Blinkerschalter in einem Kraftfahrzeug insgesamt das Bezugszeichen 10. Sie umfasst ein Gehäuse 12, einen Auslösefinger 14 sowie ein Schaltstück, von dem aus Gründen der besseren Darstellung jedoch nur Rastelemente 16 und 18, ein dreieckiges Sperrelement 20 sowie der Drehpunkt 22 dargestellt sind. Das Schaltstück insgesamt trägt das Bezugszeichen 24 und ist symbolisch durch strichpunktierte Linien angedeutet, mit denen die Rastelemente 16 und 18, das dreieckige Sperrelement 20 und der Drehpunkt 22 miteinander verbunden sind. Ein ebenfalls nur strichpunktiert angedeuteter Blinkerhebel trägt insgesamt das Bezugszeichen 26.

Das Gehäuse 12 besteht aus einem Boden 28, welcher insgesamt flach ausgebildet ist und von dem sich in senkrechter Richtung zwei dreieckige Anschläge 30 bzw. 32 erstrecken. Das Gehäuse 12 ist insgesamt gegenüber einer in Figur 1 horizontalen Ebene symmetrisch aufgebaut mit zwei senkrecht auf dem Boden 28 stehenden Wandabschnitten 34 und 36. Zwischen den beiden Wandabschnitten 34 und 36 ist in Figur 1 auf der linken Seite eine Öffnung 38 gebildet, durch die sich der Blinkerhebel 26 hindurch erstreckt. Auch auf der in Figur 1 rechten Seite ist zwischen den beiden Wandabschnitten 34 und 36 eine Öffnung 40 vorhanden, durch die sich der Auslösefinger 14 in noch näher zu beschreibender Art und Weise hindurch erstrecken kann.

Die beiden Wandabschnitte 34 und 36 sind als Rastprofile ausgebildet mit zwei Rast-Einsenkungen 42 und 44 bzw. 46 und 48. Zwischen den Rasteinsenkungen 42 und 44 im oberen Wandabschnitt 34 ist ein erhabener Sperrabschnitt 50 und zwischen den beiden Rasteinsenkungen 46 und 48 im unteren Wandabschnitt 36 ein erhabener Sperrabschnitt 52 vorhanden.

Die Rastelemente 16 und 18 des Schaltstücks 24 sind in einem in der Zeichnung nicht dargestellten Körper geführt. Sie erstrecken sich in der in Figur 1 dargestellten neutralen Mittelstellung senkrecht von der Mitte nach unten bis in die Rasteinsenkung 48 bzw. senkrecht nach oben in die Rasteinsenkung 44. Die radial innen liegenden Abschnitte der beiden Rastelemente 16 und 18 sind hohl ausgeführt und in ihnen ist eine Wendel-Druckfeder 54 angeordnet, durch die die beiden Rastelemente 16 und 18 gegen die Wandabschnitte 34 bzw. 36 beaufschlagt werden. Die den Wandabschnitten 34 bzw. 36 zugewandten Enden der Rastelemente 16 bzw. 18 sind abgerundet ausgeführt. An den radial innen liegenden Enden der beiden Rastelemente 16 bzw. 18 ist jeweils ein halbkreisförmiger Nockenansatz 56 bzw. 58 angeformt.

Der Auslösefinger 14 verfügt über einen in der in Figur 1 dargestellten Draufsicht insgesamt dreieckigen Basisabschnitt 60, an dessen in Figur 1 obere und untere Eckpunkte jeweils ein Mitnehmerfuß 62 bzw. 64 angeformt ist. Die innenliegende Wand der Mitnehmerfüße 62 bzw. 64 ist jeweils schräg ausgeführt, derart, dass die Breite der Mitnehmerfüße 62 und 64 an ihrer Spitze kleiner ist als an dem dem Basisabschnitt 60 zugewandten Bereich.

In die Außenkontur des Basisabschnitts 60 ist im Bereich der oberen und unteren Eckpunkte jeweils ein treppenartiger Absatz 65 bzw. 67 eingeformt, die mit den Anschlägen 30 bzw. 32 in noch zu beschreibender Art und Weise zusammenwirken.

An der Spitze des dreieckigen Basisabschnitts 60 ist ein Mitnehmer 66 angeformt, der in der in Figur 1 dargestellten Mittelstellung der Rückstellvorrichtung 10 nur leicht aus der Öffnung 40 im Gehäuse 12 herausragt. An den Auslösefinger 14 sind zwei Zapfen angeformt, die senkrecht zur Blattebene von Figur 1 ausgerichtet sind: Dabei erstreckt sich ein im Bereich der Spitze des dreieckartigen Basisabschnitts 60 angeordneter Zapfen 68 dem Betrachter entgegen, wohingegen ein im Bereich des linken Randes des Basisabschnitts 60 vorgesehener Zapfen 70 sich in Blickrichtung des Betrachters erstreckt.

In den beiden sich in Figur 1 von oben nach unten erstreckenden Bereichen der Wandabschnitte 34 und 36 ist jeweils eine schmale Ausnehmung (ohne Bezugszeichen) vorhanden, in die jeweils eines der Enden einer Blattfeder 72 eingeführt ist, die sich bogenförmig in Richtung auf die Öffnung 40 im Gehäuse 12 erstreckt und sich in einer nicht dargestellten Nut am Zapfen 68 abstützt. Alternativ kann die Blattfeder aber auch an jeder anderen Stelle des Auslösefingers 14 angreifen, z.B. an den Mitnehmerfüßen 62 und 64 (in Figur 1 gestrichelt dargestellt).

Die Funktion der Rückstellvorrichtung 10 wird nun anhand der Figuren 1 bis 3 erläutert:

In der in Figur 1 dargestellten neutralen Mittelstellung liegen die beiden Enden der Rastelemente 16 und 18, wie bereits oben ausgeführt worden ist, in den Rasteinsenkungen 44 und 48 in den Wandabschnitten 34 und 36. Hierdurch ist der Blinkerhebel 26 in der in Figur 1 dargestellten horizontalen Position verriegelt. Das dreieckige Sperrelement 20, welches ebenfalls Bestandteil des Schaltstücks 24 ist, befindet sich in einer in vertikaler Richtung gesehenen Mittelstellung in etwa auf der Mittelachse der öffnung 40.

An der Spitze des dreieckigen Sperrelements 20 liegt der Zapfen 70 des Auslösefingers 14 an. In diese Position wird der Auslösefinger 14 durch die Blattfeder 72 gedrückt, welche am Zapfen 68 des Auslösefingers 14 anliegt. Eine Bewegung des Auslösefingers 14 in Figur 1 nach rechts, also aus der Öffnung 40 heraus, entsprechend der Beaufschlagungsrichtung durch die Blattfeder 72, wird also durch das dreieckige Sperrelement 20 verhindert.

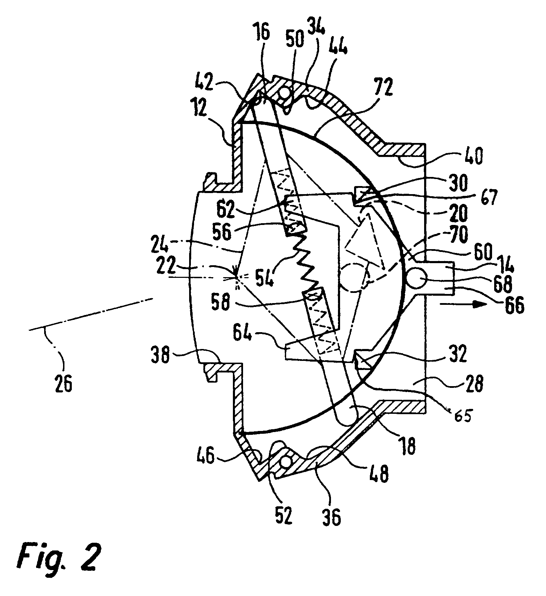

Wird nun vom Benutzer der Blinkerhebel 26 nach unten gedrückt, verschwenkt auch das Schaltstück 24 um den Drehpunkt 22. Das Rastelement 16 wird dabei durch den ansteigenden Sperrabschnitt 50 entgegen der Federkraft der Wendel-Druckfeder 54 bewegt. Hat das Rastelement 16 den Sperrabschnitt 50 überwunden, wird es durch die Kraft der Wendel-Druckfeder 54 in die Rasteinsenkung 42 gedrückt. Diese Stellung des Schaltstücks 24 ist in Figur 2 dargestellt.

Durch die Drehbewegung des Schaltstücks 24 bewegt sich auch das dreieckige Sperrelement 20 nach oben, so dass der Zapfen 70 vom dreieckigen Sperrelement 20 freikommt und der Auslösefinger 14 entsprechend der Beaufschlagungsrichtung durch die Blattfeder 72 in Richtung des Pfeiles 74 ausrückt, bis er mit seinen treppenartigen Absätzen 65 und 67 an den Anschlägen 30 und 32 anliegt. In dieser in Figur 2 dargestellten Position steht der Mitnehmer 66 des Auslösefingers 14 deutlich über den Rand der öffnung 40 über.

Die Blattfeder 70 hat in dieser Stellung kreisförmige Kontur, deren Kreismittelpunkt mit dem Drehpunkt 22 zusammenfällt.

Bei einer Drehung eines in der Figur nicht dargestellten Lenkrads wird auch eine entsprechende Lenkspindel, welche in der Zeichnung ebenfalls nicht dargestellt ist, in eine entsprechende Drehung versetzt. Die Achse der Lenkspindel steht senkrecht auf den Blattebenen der Figuren 1 bis 3. Ihre Position ist durch ein strichpunktiertes Kreuz bei dem Bezugszeichen 76 dargestellt. Mit der Lenkspindel ist eine Mitnehmerscheibe 78 verbunden, die an ihrem radial außen liegenden Rand einen Nocken 80 trägt.

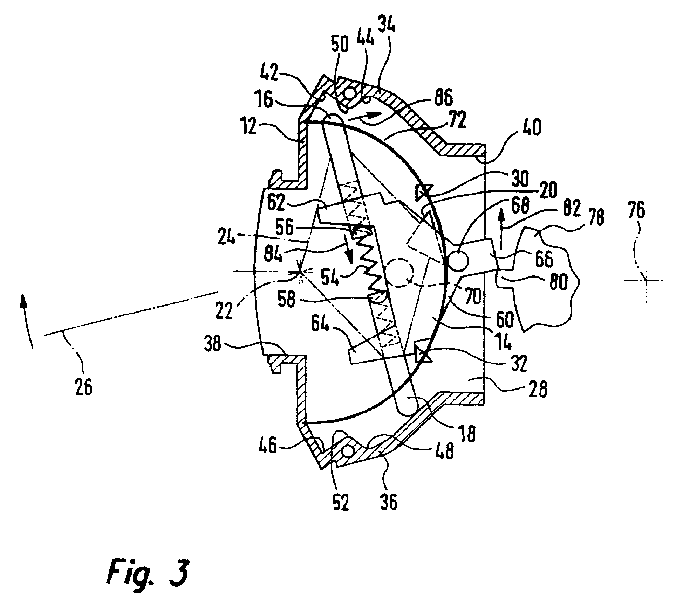

Aufgrund der Drehbewegung drückt der Nocken 80 den Mitnehmer 66 des Auslösefingers 14 in Richtung des Pfeiles 82. Hierdurch verschwenkt der Auslösefinger 14 insgesamt um eine Achse, welche parallel zur Achse 76 der Lenkspindel verläuft und durch den Berührungspunkt zwischen dem treppenartigen Absatz 67 des Auslösefingers 14 und dem Anschlag 32 des Gehäuses 12 hindurchgeht. Aufgrund dieser Schwenkbewegung des Auslösefingers 14 drückt der in Figur 3 obere Mitnehmerfuß 62 gegen den Nockenansatz 56 des Rastelements 16. Dies hat zur Folge, dass das Rastelement 16 entgegen der Beaufschlagungsrichtung der Wendel-Druckfeder 54 aus der Rasteinsenkung 42 in Richtung des Pfeiles 84 zurückgezogen wird.

Da das andere Rastelement 18 durch die Wendel-Druckfeder 54 in einem schrägen Winkel gegen den Wandabschnitt 36 gedrückt wird, verschwenkt das Schaltstück 24 in Richtung des Pfeiles 86 wieder in seine in Figur 1 dargestellte neutrale Mittelstellung. Bei dieser Schwenkbewegung des Schaltstücks 24 gleitet der an den Auslösefinger 14 angeformte Zapfen 70 am dreieckigen Sperrelement 20 entlang, wodurch der Auslösefinger 14 entgegen der Beaufschlagungsrichtung der Blattfeder 72 wieder in seine in Figur 1 dargestellte Ausgangsstellung zurückgedrückt wird, in der der Zapfen 70 an der Spitze des dreieckigen Sperrelements 20 liegt und den Auslösefinger 14 sperrt. In dieser Position steht der Mitnehmer 66 nur wenig über den Rand der Öffnung 40 über.

## Patentansprüche

1. Rückstellvorrichtung (10) für einen Blinkerschalter in Kraftfahrzeugen; welche in der Nähe einer Lenkspindel angeordnet ist und die selbsttätige Rückstellung des Blinkerschalters aus einer der beiden Einschaltstellungen in die neutrale Mittelstellung bewirkt; welche ein Gehäuse (12) und einen beweglichen Auslösefinger (14) aufweist, der in den Einschaltstellungen in die Kreisbahn eines mit der Lenkspindel verbundenen Nockens (80) hineinragt und zur Lenkspindel hin vorgespannt ist; und welche ein Schaltstück (24) aufweist, das um eine Achse im wesentlichen parallel zur Achse (76) der Lenkspindel schwenkbar angeordnet und mit in Rastprofilen (34, 36) eingreifenden Rastelementen (16, 18) ausgestattet ist und mit dem der Auslösefinger (14) zusammenwirkt, wobei eine Blattfeder (72) vorgesehen ist, welche einerseits den Auslösefinger (14) zur Lenkspindel hin beaufschlagt und sich andererseits am Gehäuse (12) abstützt, wobei die Blattfeder (72) in Einschaltstellung im wesentlichen kreisförmig gekrümmt ist, **dadurch gekennzeichnet, dass** der Kreismittelpunkt der Blattfeder in etwa im Drehpunkt (22) des Schaltstücks (24) liegt.

2. Rückstellvorrichtung nach Anspruch 1, **dadurch gekennzeichnet, dass** am Auslösefinger (14) ein sich im wesentlichen parallel zur Achse (76) der Lenkspindel erstreckender Ansatz (68) vorhanden ist, an dem die Blattfeder (72) angreift.

3. Rückstellvorrichtung nach Anspruch 2, **dadurch gekennzeichnet, dass** im Gehäuse (12) eine senkrecht zur Achse (76) der Lenkspindel verlaufende Nut vorhanden ist, in die der Ansatz (68) eingreift.

4. Rückstellvorrichtung nach einem der vorhergehenden Ansprüche, **dadurch gekennzeichnet, dass** mindestens ein Ende der Blattfeder (72) in einer Ausnehmung im Gehäuse (12) aufgenommen ist oder an das Gehäuse (12) angeformt ist.

5. Rückstellvorrichtung nach einem der vorhergehenden Ansprüche, **dadurch gekennzeichnet, dass** die Blattfeder (72) aus einem faserverstärkten Kunststoffmaterial hergestellt ist.

6. Rückstellvorrichtung nach einem der vorhergehenden Ansprüche, **dadurch gekennzeichnet, dass** der Bereich der Blattfeder (72), welcher am Auslösefinger (14) anliegt, verstärkt ausgeführt ist.

## Claims

1. Cancelling device (10) for a turn signal switch in motor vehicles; which is arranged close to a steering shaft and brings about automatic cancelling of the turn signal switch from one of the two switched-on positions into the neutral central position; comprising a housing (12) and a movable triggering finger (14) which projects, in the switched-on positions, into the circular path of a cam (80) linked to the steering shaft and is pretensioned toward the steering shaft; and having a switching member (24) which is arranged pivotable about an axis substantially parallel to the axis (76) of the steering column and is provided with detent elements (16, 18) which engage in detent profiles (34, 36) and with which the triggering finger (14) cooperates, wherein a leaf spring (72) is provided which, on the one hand, presses the triggering finger (14) toward the steering shaft and, on the other hand, is supported against the housing (12), wherein, in the switched-on position, the leaf spring (72) is bent into a substantially circular shape, **characterised in that** the circular centre point of the leaf spring lies approximately at the pivot point (22) of the switching member (24).

2. Cancelling device according to claim 1, **characterised in that** a projection (68) against which the leaf spring (72) engages is provided on the triggering finger (14) and extends substantially parallel to the axis (76) of the steering shaft.

3. Cancelling device according to claim 2, **characterised in that** a groove in which the extension (68) engages is provided in the housing (12) and runs perpendicularly to the axis (76) of the steering shaft.

4. Cancelling device according to one of the preceding claims, **characterised in that** at least one end of the leaf spring (72) is accommodated in a recess in the housing (12) or is formed on the housing (12).

5. Cancelling device according to one of the preceding claims, **characterised in that** the leaf spring (72) is made from a fibre-reinforced plastics material.

6. Cancelling device according to one of the preceding claims, **characterised in that** the region of the leaf spring (72) which lies against the triggering finger (14) is constructed reinforced.

## Revendications

1. Dispositif de rappel (10) pour un commutateur de clignotant sur des véhicules, qui est disposé à proximité d'un arbre de direction et entraîne le rappel automatique du commutateur de clignotant depuis l'une des deux positions d'enclenchement dans la position centrale neutre, lequel dispositif présente un boîtier (12) et un doigt de déclenchement (14) mobile, lequel dépasse dans les positions d'enclenchement à l'intérieur de la trajectoire circulaire d'une came (80) reliée à l'arbre de direction et est prétendu en direction de l'arbre de direction, et lequel dispositif présente une pièce de contact (24) qui est disposé de façon à pouvoir basculer autour d'un axe sensiblement parallèlement à l'axe (76) de l'arbre de direction et est équipé d'éléments d'encliquetage (16, 18) s'engageant dans des profils d'encliquetage (34, 36), et avec laquelle le doigt de déclenchement (14) coopère, un ressort à lame (72) étant prévu, lequel d'une part sollicite le doigt de déclenchement (14) en direction de l'arbre de direction et d'autre part s'appuie sur le boîtier (12), le ressort à lame (72) étant incurvé sensiblement de façon circulaire dans la position d'enclenchement, **caractérisé en ce que** le centre du cercle du ressort à lame se situe à peu près au point de rotation (22) de la pièce de contact (24).

2. Dispositif de rappel selon la revendication 1, **caractérisé en ce qu'**un appendice (68), s'étendant sensiblement parallèlement à l'axe (76), de l'arbre de direction, sur lequel le ressort à lame (72) est appliqué, est présent sur le doigt de déclenchement (14).

3. Dispositif de rappel selon la revendication 2, **caractérisé en ce qu'**une rainure agencée perpendiculairement à l'axe (76) de l'arbre de direction, dans laquelle l'appendice (68) s'engage, est présente dans le boîtier (12).

4. Dispositif de rappel selon l'une quelconque des revendications précédentes, **caractérisé en ce qu'**au moins une extrémité du ressort à lame (72) est réceptionnée dans un évidement dans le boîtier (12) ou est formée sur le boîtier (12).

5. Dispositif de rappel selon l'une quelconque des revendications précédentes, **caractérisé en ce que** le ressort à lame (72) est fabriqué à base d'un matériau plastique renforcé de fibres.

6. Dispositif de rappel selon l'une quelconque des revendications précédentes, **caractérisé en ce que** la zone du ressort à lame (72), qui s'applique sur le doigt de déclenchement (14), est réalisée dans une version renforcée.
